# EUROPEAN PATENT APPLICATION

(11) **EP 0 658 965 A1**
(43) Date of publication of application: **21.06.1995**
(21) Application number: 94118650.4
(22) Date of filing: 28.11.1994
(51) Int. Cl.: H02G 3/04

(54) **Cable-clamp collar for raceways**

(30) Priority: 15.12.1993 IT GE930107
(71) Applicant: BOCCHIOTTI SOCIETA'PER L'INDUSTRIA ELETTROTECNICA S.P.A., I-16121 Genova (IT)
(72) Inventor: Reggio d'Aci, Franco, I-16121 Genova (IT)
(74) Representative: Porsia, Attilio, Dr.

(57) **Abstract**

Cable-clamp collar for raceways of the type consisting of an element in strip form made of rigid or semi-rigid plastics material with a U-shaped profile, comprising a base section, two lateral arms and two cable-retention limbs at the free ends of the said lateral arms, the said base section being provided with at least one hole for connection to the base of the raceway; this collar has at least one means for attaching the collar to the raceway, which is integral with the collar, disposed in the position of the said hole, and connected to the latter by means of thin bridges which are broken at the moment of attachment.

## Description

The present invention relates to a cable retention element or collar to be attached inside a cable-holder raceway, or a cable wiring raceway, and consists essentially of an element in strip form made of rigid or semi-rigid plastics material, with a U-shaped profile, in which the upper ends of the U arms extend inwards and downwards with a substantially C-shaped profile.

Currently, collars of this type are secured to the base of the raceways by means of stud elements which are not integral with the collars, and are inserted in slots which exist in the base of the raceways and in holes which exist in the base section of the collars.

However, attachment by this means has a certain number of disadvantages: firstly these studs, which are separate from the collars, can easily be lost, or can slip when being fitted, thus causing problems to the fitters. In addition, these studs are essentially rigid elements, and as such do not ensure flexible locking of the collar on the raceway. Another problem involves the stability of the collar inside the raceway, in particular when the cables are rearranged in the raceway, for example for maintenance purposes. However the collars according to the state of the art do not prevent rotation around the pins by means of which they are attached to the raceway, thus detracting from the efficiency of retention of the cables.

In order to eliminate these and other disadvantages, the object of the present invention is a cable-clamp collar for raceways, in which the said collar has means for attaching the collar to the raceway, which are integral with the collar, disposed in the position of the holes, and connected to the latter by means of thin bridges which are broken at the moment of attachment.

According to a further feature of the invention, the said attachment means are studs which consist of a head, a shaft and a foot, the head being provided with flexible fins which ensure that the said studs are locked flexibly.

A further object of the present invention is collars which are provided on the inner surface of their base, with projections which are inserted in the slots which exist in the base of the raceway, and which prevent the collars from rotating inside the raceway.

Further advantages and features of the present invention will become apparent from the following detailed description of a preferred embodiment of the invention, produced by way of non-limiting example, with reference to the attached drawings, in which:
Figure 1 is a transverse cross-section of a raceway with the cable-clamp collar according to the invention inserted, with the attachment stud of the collar still to be inserted in the hole of the collar and in the slot of the raceway;
Figure 2 is a plan view from below of the collar according to the invention;
Figure 3 is a plan view from above of the collar in Figure 2;
Figure 4 is a detail of a plan view from below of the raceway in Figure 1;
Figure 5 is a detail of Figure 1;
Figures 6 and 7 represent the successive stages of attachment of the collar as shown in Figure 5; and
Figure 8 is a view similar to that in Figure 4, with the attachment operation completed.

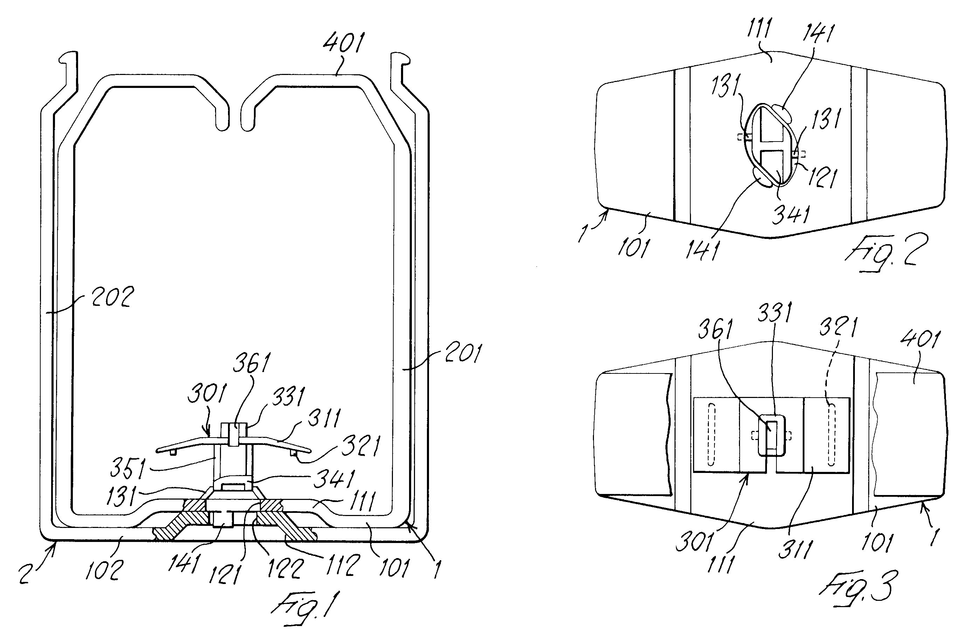

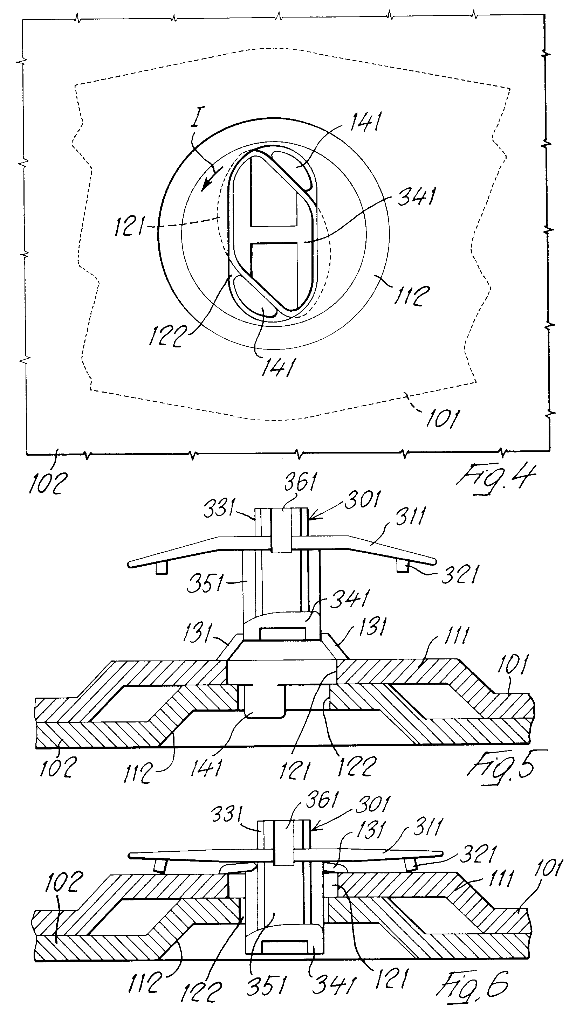

In Figure 1, 1 designates the cable-clamp collar according to the invention; it is inserted inside a cable-holder raceway 2, which consists of a base 102 and two lateral walls 202. The collar 1 is disposed in a frusto-conical recess 112 in the base 102 of the raceway, in which a slot 122 is provided. The collar 1 has a base section 101 and two lateral arms 201 which branch from the ends of the said base. At the upper end opposite the base section 101, the said lateral arms 201 have limbs to restrain the cables 401. In its central section, the base 101 comprises a bridge part 111; a hole 121 is provided in this bridge part, and on the perimeter of the said hole two projections 141 which are perpendicular to the plane of the base 101 of the collar 1, project towards the base, on the surface facing the raceway 2, and such as to be inserted in the slot 122 of the indentation 112. On the upper surface of the base 101 of the collar, there is a stud attachment element 301, hereinafter known as a stud, which is integral with the collar 1, and is attached to the latter by means of bridges 131 which are disposed on opposite sides of the hole 121. This stud 301 comprises a head 331 which is provided with a recess 361 for insertion of the tool used for attachment, at the sides of which there extend two fins 311 which are provided on their ends with transverse extensions 321 on the lower surface; a shaft 351 which is disposed below the head 331; and a foot 341 which is connected by means of the bridges 131 previously described. The foot 341 has a base in the form of a parallelogram with rounded angles, as shown in Figure 2.

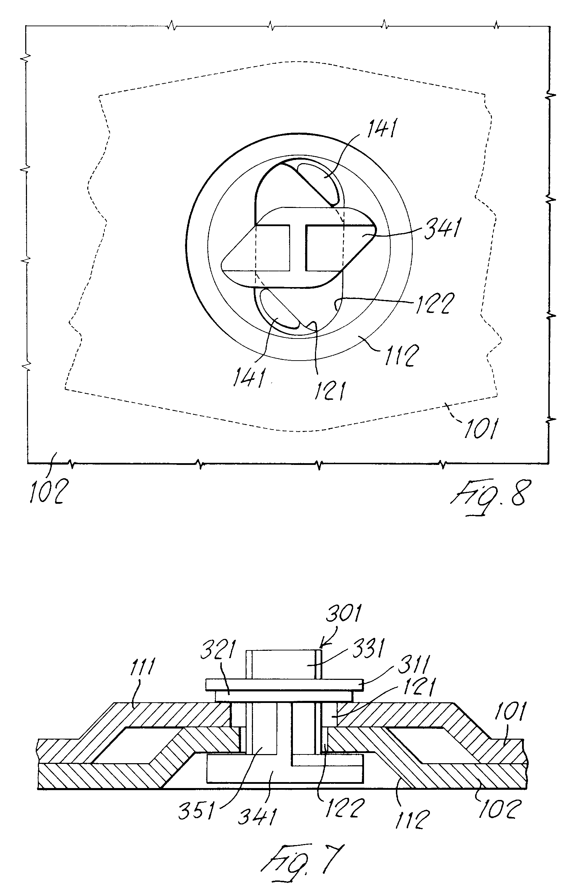

Figure 5 illustrates a detail of Figure 1, which shows the stud 301, the collar 1 and the raceway 2 before the attachment operation. The same situation is illustrated as a plan view from below in Figure 4. During attachment, a tool suitable for this use is inserted in the recess 361 in the head 331 of the stud 301; pressure is then exerted on the stud 301 towards the slot 122 in the recess 112 of the raceway 2. The pressure exerted on the head 331 of the stud 301 forces the bridges 131 downwards until they break, and after they have broken, makes the shaft 351 and the foot 341 penetrate firstly into the hole 121 in the collar, and then into the slot 122 in the raceway (see Figure 6). At this point, still using the same tool, the head 331 of the stud 301 is rotated clockwise, causing the foot 341 to rotate anticlockwise, as indicated by the arrow I in Figure 4. The foot then locks against the inner surface of the recess 112, and is positioned between the two projections 141 of the collar 1 (see Figures 7 and 8). After this anchorage of the foot 341 of the stud 301 in the recess 112 of the raceway 2, the fins 311, the ends of which are angled downwards, abut flexibly with their transverse extensions 321 the surface of the bridge 111 of the base of the collar 1 (see Figure 7), by this means reinforcing the connection between the collar 1 and the raceway 2.

By this means, a stable connection is formed between the collar and the raceway, thus preventing undesirable possibilities of rotation of the collar inside the raceway, and the cable-clamp collar for raceways and its attachment means are rendered integral.

## Claims

1. Cable-clamp collar for raceways of the type consisting of an element in strip form made of rigid or semi-rigid plastics material, with a U-shaped profile, comprising a base section (101), two lateral arms (201) and two cable-retention limbs (401) in the form of two arms which extend towards the inside of the free ends of the lateral arms, this base section (101) being provided with at least one hole (121) for connection of the collar to the base of the raceway (2), characterized in that the collar (1) has at least one means (301) for attaching the collar to the raceway, which is integral with the collar, disposed in the position of the hole (121), and connected to the latter by means of thin bridges (131) which are broken at the moment of attachment.

2. Cable-clamp collar according to Claim 1, in which the attachment means are studs (301), comprising a head (331), a shaft (351) and a foot (341), the head being provided with flexible fins (311).

3. Cable-clamp collar according to Claims 1 and 2, in which the head (331) of the studs (301) has a recess (361) for insertion of a tool.

4. Cable-clamp collar according to the preceding claims, in which two projections (141), which are perpendicular to the plane of the base (101), are provided on the lower surface of the base (101) of the collar (1), on the perimeter edge of the hole (121)
